# EUROPEAN PATENT APPLICATION

(11) **EP 3 109 036 A1**
(43) Date of publication of application: **28.12.2016**
(21) Application number: 15751947.1
(22) Date of filing: 19.02.2015
(51) Int. Cl.: B29C 70/06, B29K 105/08

(54) **METHOD FOR PRODUCING FIBER-REINFORCED RESIN COMPOSITE MATERIAL**

(30) Priority: 21.02.2014 JP 2014032119
(71) Applicant: Nicca Chemical Co., Ltd., Fukui-shi, Fukui 910-8670 (JP)
(72) Inventor: ISHIDA Kenji, Fukui-shi Fukui 910-8670 (JP); BANKO Hirotomo, Fukui-shi Fukui 910-8670 (JP); TSUJI Tomoharu, Mikata-gun Fukui 919-1122 (JP); KIKUCHI Teruchika, Mikata-gun Fukui 919-1122 (JP); TAKEYAMA Kazuo, Fukui-shi Fukui 910-3145 (JP); MASUTANI Naoyuki, Fukui-shi Fukui 910-3145 (JP)
(74) Representative: Boult Wade Tennant
(86) International application number: PCT/JP2015/054638
(87) International publication number: WO 2015/125875

(57) **Abstract**

A method for producing a fiber-reinforced resin composite material includes a step of curing a composition for producing a fiber-reinforced resin composite material, which includes a reinforcing fiber material and a resin composition including a radical reactive resin having at least one polymerizable unsaturated double bond, by irradiating the composition with ionizing radiation.

## Description

### Technical Field

The present invention relates to a method for producing a fiber-reinforced resin composite material.

### Background Art

Fiber-reinforced resin composite materials, in which resin materials have been reinforced with reinforcing fiber materials such as carbon fibers or glass fibers, are generally characterized by having excellent strength and rigidity. Such fiber-reinforced resin composite materials are widely used in various applications ranging from, for example, structural materials for aircrafts to automotive parts and sports applications such as rackets and golf shafts, by utilizing lightweightness of the materials.

As a fiber-reinforced resin composite material, for example, Patent Literature 1 described below suggests a carbon fiber-reinforced resin composite material produced by curing a composition that includes an epoxy group-containing vinyl ester resin having epoxy groups and ethylenically unsaturated groups at predetermined proportions in one molecule, a radical polymerizable monomer, a curing agent, and carbon fibers impregnated in advance with a vinyl ester resin as a sizing agent, which is obtainable by an addition reaction between an epoxy resin and an ethylenically unsaturated carboxylic acid. Furthermore, Patent Literature 2 described below suggests a prepreg for a radical curing-based fiber-reinforced resin composite material that has excellent designability and can realize high productivity and excellent toughness or heat resistance through post-curing. Furthermore, Patent Literature 3 described below suggests a technology for producing a composite material composed of carbon fibers, a curable resin and a catalyst, irradiating the composite material, and thereby achieving curing even to the resin inside the composite material. Furthermore, Patent Literature 4 described below suggests a method for molding a composite material, by which a high-quality composite material without voids or the like is obtained at a high molding rate.

### Citation List

### Patent Literature

Patent Literature 1: International Patent Publication No. 2004/067612
Patent Literature 2: Japanese Unexamined Patent Publication No. 2006-152161
Patent Literature 3: Japanese Unexamined Patent Publication No. H8-57971
Patent Literature 4: Japanese Unexamined Patent Publication No. 2011-5736

### Summary of Invention

### Technical Problem

However, the prior art technologies described above have a problem that a long time is required for sufficient curing, and there is room for an improvement from the viewpoint of shortening the production time.

Specifically, in the case of the material described in Patent Literature 1, a technique for curing by heating is adopted; however, heating for a certain time is needed for curing of the resin, and when the time for temperature rise to a predetermined temperature, or the time required for cooling to a temperature at which a molded product can be taken out is included, curing of the resin requires a long period of time. In the case of the prepreg described in Patent Literature 2, a technique for curing by utilizing a radical excited by irradiation with ultraviolet radiation is adopted; however, in order for the fiber-reinforced resin composite material to obtain sufficient strength, irradiation with ultraviolet radiation only is insufficient, and thermal curing is further needed. In the case of the method described in Patent Literature 3, a technique for curing by utilizing a radical excited by irradiation with visible light is adopted; however, only with the heat of reaction that is generated along with curing of the resin at the surface and the heat generated when the carbon fibers absorb light, curing occurs insufficiently, especially in a case in which the fiber-reinforced resin composite material has thickness. In the case of the method described in Patent Literature 4, a technique for curing by irradiation with heat and radiation is adopted, and before the curing by irradiation with radiation, preliminary curing by means of heat is needed.

The present invention was achieved in view of such circumstances, and it is an object of the invention to provide a method for producing a fiber-reinforced resin composite material, which enables shortening of the production time.

### Solution to Problem

In order to solve the problems described above, the inventors of the present invention conducted thorough investigations, and as a result, the inventors found that when a composition for producing a fiber-reinforced resin composite material, in which a reinforcing fiber material and a particular resin composition are included, is irradiated with ionizing radiation, even if preliminary curing by means of heat or the like or post-curing is not carried out, curing can be achieved sufficiently and uniformly in a short time period. Thus, the inventors finally completed the present invention.

That is, the present invention provides a method for producing a fiber-reinforced resin composite material, the method including a step of curing a composition for producing a fiber-reinforced resin composite material, which includes a reinforcing fiber material and a resin composition including a radical reactive resin having at least one polymerizable unsaturated double bond, by irradiating the composition with ionizing radiation.

According to the present invention, shortening of the production time during the production of a fiber-reinforced resin composite material is enabled.

Meanwhile, as a method for promoting shortening of the curing time in the prior art technologies described above, incorporating a curing aid into the resin composition may be considered. However, when it is attempted to enhance curability of the resin composition by such a method, since a resin composition or a composition for producing a fiber-reinforced resin composite material exhibits deteriorated stability in an environment such as high temperature or irradiation with ultraviolet radiation, curing is easily initiated, and handling is made difficult. In this regard, according to the method of the present invention, since the resin composition can be sufficiently cured without depending on the incorporation of a curing aid, deterioration of stability such as initiation of curing does not occur, and production of a fiber-reinforced resin composite material is enabled in a time period that is much shorter than conventional methods.

In regard to the method of the present invention, it is preferable that the total absorbed dose of ionizing radiation for the composition for producing a fiber-reinforced resin composite material is 10 kGy to 500 kGy.

According to the method of the present invention, it is preferable that the radical reactive resin is at least one compound selected from the group consisting of a compound represented by the following General Formula (1) and a compound represented by the following General Formula (2): 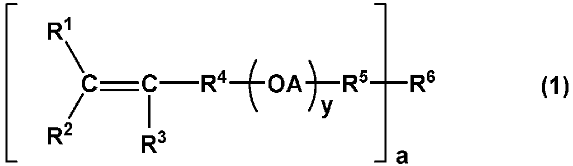 wherein in General Formula (1), R¹, R² and R³ each independently represent a hydrogen atom, a halogen atom, an alkyl group having 1 to 4 carbon atoms, or a phenyl group which may have an alkyl group having 1 to 4 carbon atoms; R⁴ represents -C(=O)-, -C(=O)-O-(CH₂)ₘ (wherein m represents an integer from 1 to 3), -C(=O)-O-NHC(=O)-, -C(=O)-O-CH(OH)-CH₂-CH₂-, -C(₌O)-O-CH₂-CH(OH)-CH₂-, -(CH₂)ₙ-(wherein n represents an integer from 1 to 3), -O-C(=O)-, -CH₂=CH-C(=O)-, or a single bond; a represents an integer from 1 to 40; R⁵ represents -O-, -N(-R⁷)- (wherein R⁷ represents a hydrogen atom or an alkyl group having 1 to 3 carbon atoms), or -O-(O=)C-; R⁶ represents a branched or linear a-valent hydrocarbon compound residue, an a-valent compound residue having a cyclic hydrocarbon, an a-valent urethane compound residue, an a-valent ester compound residue, or an a-valent ether compound residue; A represents an alkylene group having 2 to 4 carbon atoms; and y is the average number of added moles of an oxyalkylene group represented by OA, and represents an integer from 0 to 40. 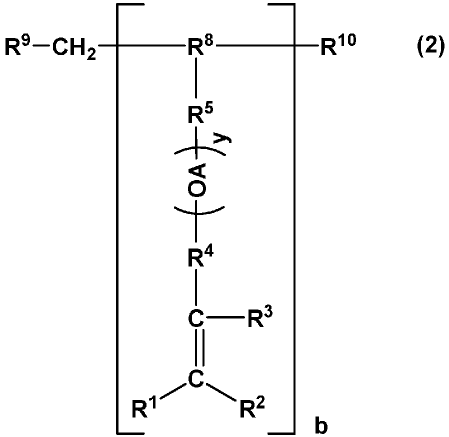 wherein in General Formula (2), R¹, R², R³, R⁴, R⁵, A, and y respectively have the same meanings as described above; R⁸ represents a trivalent compound residue having a cyclic hydrocarbon; R⁹ and R¹⁰ each independently represent a group represented by the following General Formula (3); and b represents an integer from 1 to 40. 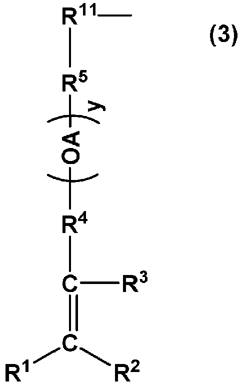 wherein in General Formula (3), R¹, R², R³, R⁴, R⁵, A, and y respectively have the same meanings as described above; and R¹¹ represents a divalent compound residue having a cyclic hydrocarbon.

Furthermore, it is preferable that the radical reactive resin is at least one compound selected from the group consisting of a compound represented by General Formula (1) described above, in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; a represents 2; y has the same meaning as described above; and R⁶ represents a group represented by the following General Formula (4), and a compound represented by General Formula (2) described above, in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; y and b respectively have the same meanings as described above; R⁹ and R¹⁰ each represent a group represented by General Formula (3) described above, wherein in General Formula (3), R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; R¹¹ represents a group represented by the following General Formula (10); and y has the same meaning as described above; and R⁸ represents a group represented by the following General Formula (12). 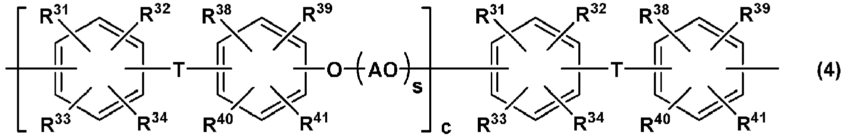 wherein in General Formula (4), R³¹, R³², R³³, R³⁴, R³⁸, R³⁹, R⁴⁰, and R⁴¹ each independently represent a hydrogen atom, an alkyl group having 1 to 4 carbon atoms, or a phenyl group which may have an alkyl group having 1 to 4 carbon atoms; T represents a divalent group represented by the following General Formula (5), a divalent group represented by the following Formula (6), a divalent group represented by the following Formula (7), a divalent group represented by the following Formula (8), a divalent group represented by the following Formula (9), or -SO₂-; s is the average number of added moles of an alkyleneoxy group represented by AO, and represents an integer from 0 to 40; and c represents an integer from 0 to 20. 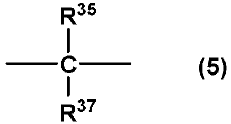 wherein in General Formula (5), R³⁵ and R³⁷ each independently represent a hydrogen atom, an alkyl group having 1 to 4 carbon atoms, a phenyl group which may have an alkyl group having 1 to 4 carbon atoms, -CF₃, -CHF₂ or -CH₂F, or R³⁵ and R³⁷ together represent =CCl₂. 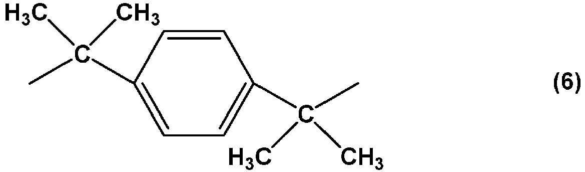 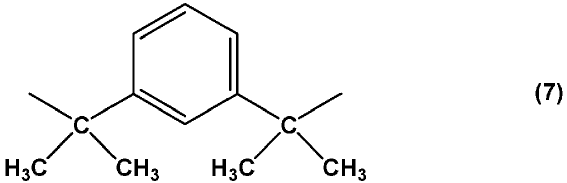 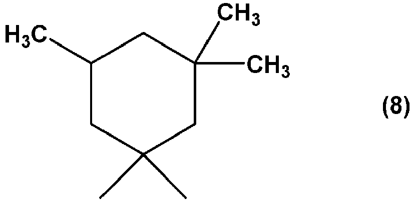 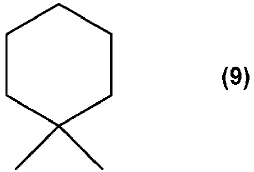 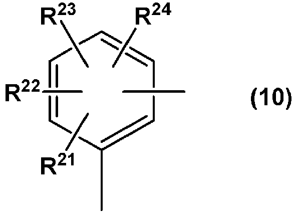 wherein in General Formula (10), R²¹, R²², R²³ and R²⁴ each independently represent a hydrogen atom, an alkyl group having 1 to 4 carbon atoms, a phenyl group which may have an alkyl group having 1 to 4 carbon atoms, or a group represented by the following General Formula (11): 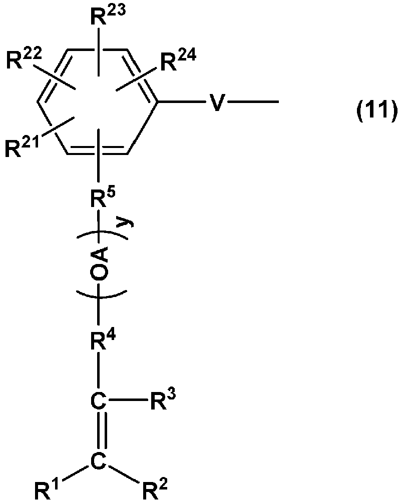 wherein in General Formula (11), R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; R²¹, R²², R²³ and R²⁴ each independently represent a hydrogen atom, an alkyl group having 1 to 4 carbon atoms, or a phenyl group which may have an alkyl group having 1 to 4 carbon atoms; y has the same meaning as described above; V has the same meaning as T described above, or a single bond. 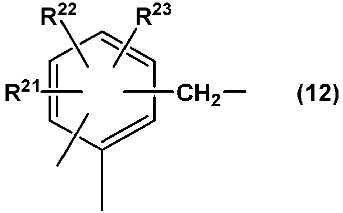 wherein in General Formula (12), R²¹, R²² and R²³ each independently represent a hydrogen atom, an alkyl group having 1 to 4 carbon atoms, or a phenyl group which may have an alkyl group having 1 to 4 carbon atoms, or have the same meaning as the group represented by General Formula (11) described above.

Furthermore, it is preferable that the radical reactive resin is at least one compound selected from the group consisting of a compound represented by General Formula (1) described above, in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; y is 0; a is 2; and R⁶ represents a group represented by the following General Formula (13), and a compound represented by General Formula (2) described above, in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; y is 0; b represents an integer from 1 to 20; R⁹ and R¹⁰ each represent a group represented by General Formula (3) described above, wherein in General Formula (3), R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; R¹¹ represents a group represented by General Formula (10) described above, wherein in General Formula (1), R²¹, R²², R²³, and R²⁴ each independently represent a methyl group or a hydrogen atom, while at least one is a methyl group; y is 0; R⁸ represents a group represented by General Formula (12), wherein in General Formula (12), R²¹, R²², and R²³ each independently represent a methyl group or a hydrogen atom, while at least one is a methyl group. 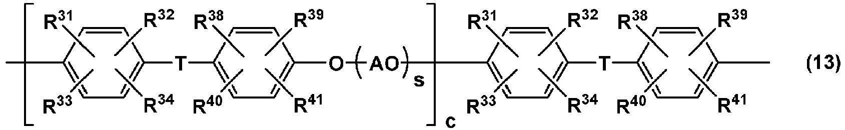 wherein in General Formula (13), R³¹, R³², R³³, R³⁴, R³⁸, R³⁹, R⁴⁰, and R⁴¹ represent hydrogen atoms; T represents a divalent group represented by General Formula (5), wherein in General Formula (5), R³⁵ and R³⁷ represent methyl groups; and c represents 0.

### Advantageous Effects of Invention

The production method related to the present invention, even if preliminary curing by means of heat or the like or post-curing is not carried out, a fiber-reinforced resin composite material that has been cured sufficiently and uniformly in a short time period can be obtained. Therefore, according to the present invention, a method for producing a fiber-reinforced resin composite material, which enables shortening of the production time, can be provided.

Furthermore, the production method related to the present invention has an advantage that, since a fiber-reinforced resin composite material that has been sufficiently cured can be obtained without depending on the incorporation of a curing aid, a fiber-reinforced resin composite material can be produced without deterioration of stability, such as initiation of curing.

### Description of Embodiments

Hereinafter, suitable embodiments of the method for producing a fiber-reinforced resin composite material related to the present invention will be explained in detail.

The method for producing a fiber-reinforced resin composite material related to the present embodiment include a step of curing a composition for producing a fiber-reinforced resin composite material, which includes a reinforcing fiber material and a resin composition including a radical reactive resin having at least one polymerizable unsaturated double bond (there are occasions in which the resin composition is also referred to as a radical reactive resin composition), by irradiating the composition for producing a fiber-reinforced resin composite material with ionizing radiation.

The radical reactive resin having at least one polymerizable unsaturated double bond (hereinafter, briefly described as radical reactive resin) used for the present embodiment is a compound in which unsaturated double bond parts are excited by irradiation with ionizing radiation, and a polymerization reaction is induced by the radical thus generated.

The radical reactive resin may have one or more reactive groups such as a hydroxyl group, a carboxyl group, a carboxylic acid anhydride group, an amino group, and an epoxy group, in portions of the resin structure.

Specific examples of the radical reactive resin include a compound represented by the following General Formula (1). 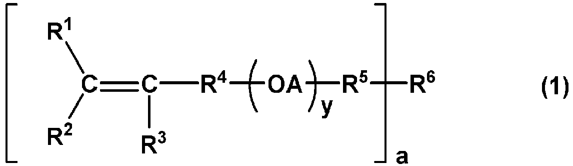 wherein in General Formula (1), R¹, R², and R³ each independently represent a hydrogen atom, a halogen atom, an alkyl group having 1 to 4 carbon atoms, or a phenyl group which may have an alkyl group having 1 to 4 carbon atoms; R⁴ represents -C(=O)-, -C(=O)-O-(CH₂)ₘ-(wherein m represents an integer from 1 to 3), -C(=O)-O-NHC(=O)-, -C(=O)-O-CH(OH)-CH₂-CH₂-, -C(=O)-O-CH₂-CH(OH)-CH₂-, -(CH₂)ₙ-(wherein n represents an integer from 1 to 3), -O-C(=O)-, -CH₂=CH-C(=O)-, or a single bond; a represents an integer from 1 to 40, and preferably represents an integer from 2 to 10; R⁵ represents -O-, -N(-R⁷)- (wherein R⁷ represents a hydrogen atom or an alkyl group having 1 to 3 carbon atoms), or -O-(O=)C-; R⁶ represents a branched or linear a-valent hydrocarbon compound residue, an a-valent compound residue having a cyclic hydrocarbon, an a-valent urethane compound residue, an a-valent ester compound residue, or an a-valent ether compound residue; A represents an alkylene group having 2 to 4 carbon atoms; and y is the average number of added moles of an oxyalkylene group represented by OA, and represents an integer from 0 to 40.

Here, the branched or linear a-valent hydrocarbon compound residue, the a-valent compound residue having a cyclic hydrocarbon, the a-valent urethane compound residue, the a-valent ester compound residue, and the a-valent ether compound residue represent products obtained by eliminating a units of a functional group having an active hydrogen atoms, such as -OH, -NH₂, or -COOH, from the respective compounds.

Examples of the branched or linear a-valent hydrocarbon compound residue include a saturated or unsaturated hydrocarbon compound residue having 1 to 40 carbon atoms.

Examples of the a-valent compound residue having a cyclic hydrocarbon group include bisphenols, alkylene oxide adducts of bisphenols, aromatic polyhydric alcohols, alkylene oxide adducts of aromatic polyhydric alcohols, alicyclic polyhydric alcohols, alkylene oxide adducts of alicyclic polyhydric alcohols, and residues of dehydration condensates thereof.

Examples of the a-valent urethane compound residue include a urethane compound residue obtainable through a reaction between a polyol and an organic polyisocyanate compound, and a compound having two or more active hydrogen atoms can be used in combination for this reaction. The polyol is not particularly limited as long as the polyol has two or more hydroxyl groups, and examples thereof include a polyether polyol, a polyester polyol, a polycarbonate polyol, a silicone polyol, and a fluoropolyol.

Examples of the polyether polyol include aliphatic polyhydric alcohols such as ethylene glycol, propylene glycol, butanediol, neopentyl glycol, diethylene glycol, 1,3-propanediol, 1,4-butanediol, 1,3-butanediol, 1,5-pentanediol, 1,6-hexanediol, 2,2-diethyl-1,3-propanediol, 2-n-butyl-2-ethyl-1,3-propanediol, trimethylolpropane, and glycerin; aromatic polyhydric alcohols such as pyrocatechol, resorcinol, hydroquinone, pyrogallol, 1,2,4,5-benzenetetraol, and p-xylene diglycol; alicyclic polyhydric alcohols such as 1,4-cyclohexanedimethanol, tricyclodecanedimethanol, 1,9-nonadiol, and pentacyclopentadecanedimethanol; bisphenols such as bisphenol A, bisphenol AP, bisphenol B, bisphenol E, bisphenol F, and bisphenol S; biphenols; polyhydric sugar alcohols such as D-threitol, L-threitol, D-arabinitol, L-arabinitol, xylitol, ribitol, galactitol, D-glucitol, and mannitol; polyols obtainable by random addition or block addition of an alkylene oxide having 2 to 4 carbon atoms, such as ethylene oxide, propylene oxide, butylene oxide, trimethylene oxide, or tetramethylene oxide, to the polyols described above; and compounds obtainable by random dehydration condensation or block dehydration or condensation of an alkylene oxide having 2 to 4 carbon atoms to the polyols described above.

Examples of the polyester polyol include polyethylene adipate diol, polybutylene adipate diol, polyethylene butylene adipate diol, polyhexamethylene isophthalate adipate diol, polyethylene succinate diol, polyethylene succinate diol, polyethylene sebacate diol, polybutylene sebacate diol, poly-ε-caprolactone diol, poly(3-methyl-1,5-pentylene) adipate diol, a polycondensate of 1,6-hexanediol and a dimer acid, a co-polycondensate of 1,6-hexanediol, adipic acid and a dimer acid, a polycondensate of nonanediol and a dimer acid, and a co-polycondensate of ethylene glycol, adipic acid and a dimer acid.

Examples of the polycarbonate polyol include polytetramethylene carbonate diol, polyhexamethylene carbonate diol, poly-1,4-cyclohexanedimethylene carbonate diol, and 1,6-hexanediol polycarbonate polyol.

Examples of the silicone polyol include products obtainable by introducing two or more hydroxyl groups and/or organic groups having a hydroxyl group, into the terminal and/or a side chain of a dimethylpolysiloxane. Examples thereof include a carbinol-modified silicone oil, a polyether-modified silicone oil, and a silanol-terminal silicone oil.

Examples of the fluoropolyol include polyols containing fluorine in the molecules, and examples thereof include ZEFFLE GK510 and GK570 (all manufactured by DAIKIN INDUSTRIES, LTD); and LUMIFLON LF200 and LF400 (all manufactured by ASAHI GLASS CO., LTD.). These polyols may be used singly or in combination of two or more kinds thereof.

There are no particular limitations on the organic polyisocyanate, and examples thereof include an aliphatic polyisocyanate, an alicyclic polyisocyanate, and an aromatic polyisocyanate, all having two or more isocyanate groups. Examples of such an organic polyisocyanate include aliphatic diisocyanate compounds such as hexamethylene diisocyanate and trimethylhexamethylene diisocyanate; alicyclic diisocyanate compounds such as isophorone diisocyanate, hydrogenated xylene diisocyanate, dicyclohexylmethane diisocyanate, norbornane diisocyanate, and 1,3-bis(isocyanatomethyl)cyclohexane; and aromatic diisocyanate compounds such as tolylene diisocyanate, diphenylmethane diisocyanate, naphthalene diisocyanate, tolidine diisocyanate, xylene diisocyanate, and tetramethylxylene diisocyanate. These polyisocyanate compounds may be used singly, or two or more kinds thereof may be used in combination.

Examples of the a-valent ester compound residue include an ester compound residue obtainable by a reaction between a polyol and a polycarboxylic acid compound. Examples of the polyol include the same compounds as those described above. The polycarboxylic acid compound is not particularly limited as long as the compound has two or more carboxyl groups, and examples include an aliphatic dicarboxylic acid, an aromatic dicarboxylic acid, and a trivalent or higher-valent aromatic polycarboxylic acid. Examples of the aliphatic dicarboxylic acid include 2-butyloctanedioic acid, 8-vinyl-10-octadecenedioic acid, 8-ethyloctadecanedioic acid, 8,13-dimethyl-8,12-icosadienedioic acid, 8,13-dimethylicosanedioic acid, and 8,9-diphenylhexadecanedioic acid. Furthermore, acid anhydrides thereof, and lower alkyl esters thereof may also be used. Examples of the aromatic dicarboxylic acid include terephthalic acid, isophthalic acid, phthalic acid, naphthalene-2,7-dicarboxylic acid, and naphthalene-2,6-dicarboxylic acid. Examples of the trivalent or higher-valent aromatic polycarboxylic acid include trimellitic acid, pyromellitic acid, 2,5,7-naphthalenetricarboxylic acid, 1,2,4-naphthalenetricarboxylic acid, and anhydrides thereof. These may be used in combination of two or more kinds thereof.

Examples of the a-valent ether compound residue include an ether compound residue obtainable by dehydration condensation of a polyol or an alkylene oxide having 2 to 4 carbon atoms. Examples of the polyol include the same compounds as those described above.

From the viewpoint of the tensile strength of the fiber-reinforced resin composite material, the compound represented by General Formula (1) is preferably a compound in which R⁶ represents an a-valent compound residue having a cyclic hydrocarbon, or an a-valent urethane compound residue.

Furthermore, from the viewpoint of the tensile strength of the fiber-reinforced resin composite material, the compound represented by General Formula (1) is preferably a compound in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; a is 2; y is the same as described above; and R⁶ represents a group represented by the following General Formula (4) (hereinafter, referred to as Compound (1-1)). 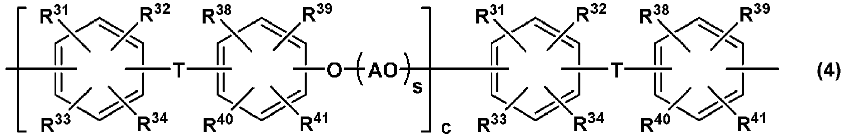 wherein in General Formula (4), R³¹, R³², R³³, R³⁴, R³⁸, R³⁹, R⁴⁰, and R⁴¹ each independently represent a hydrogen atom, an alkyl group having 1 to 4 carbon atoms, or a phenyl group which may have an alkyl group having 1 to 4 carbon atoms; T represents a divalent group represented by the following General Formula (5), a divalent group represented by the following General Formula (6), a divalent group represented by the following General Formula (7), a divalent group represented by the following General Formula (8), a divalent group represented by the following General Formula (9), or -SO₂-; s is the average number of added moles of an alkyleneoxy group represented by AO, and represents an integer from 0 to 40; and c represents an integer from 0 to 20. 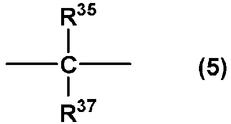 wherein in General Formula (5), R³⁵ and R³⁷ each independently represent a hydrogen atom, an alkyl group having 1 to 4 carbon atoms, a phenyl group which may have an alkyl group having 1 to 4 carbon atoms, -CF₃, -CHF₂, or -CH₂F, or R³⁵ and R³⁷ represent =CCl₂.

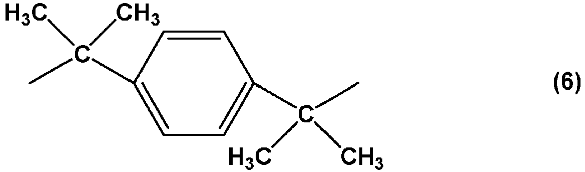

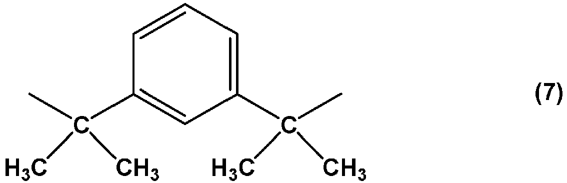

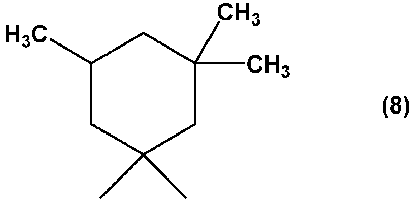

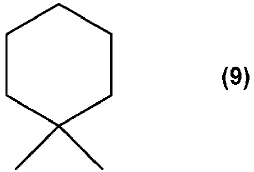

Furthermore, from the viewpoint of the tensile strength of the fiber-reinforced resin composite material, the compound represented by General Formula (1) is preferably a compound in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; y is 0; a is 2; and R⁶ represents a group represented by the following General Formula (13) (hereinafter, referred to as Compound (1-2)). 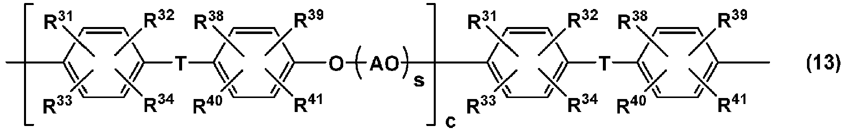 wherein in General Formula (13), R³¹, R³², R³³, R³⁴, R³⁸, R³⁹, R⁴⁰, and R⁴¹ represent hydrogen atoms; T represents a divalent group represented by General Formula (5) described above, wherein in General Formula (5), R³⁵ and R³⁷ represent methyl group; and c represents 0.

Furthermore, specific examples of the radical reactive resin include a compound represented by the following General Formula (2). 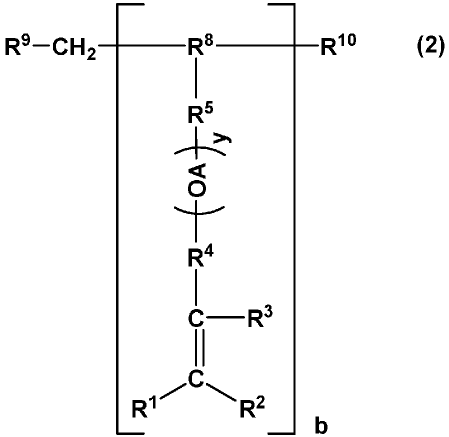 wherein in General Formula (2), R¹, R², R³, R⁴, R⁵, A, and y respectively have the same meanings as described above; R⁸ represents a trivalent compound residue having a cyclic hydrocarbon; R⁹ and R¹⁰ each independently represent a group represented by the following General Formula (3); and b represents an integer from 1 to 40. Here, the trivalent compound residue having a cyclic hydrocarbon indicates a residue obtainable by eliminating three functional groups having an active hydrogen atom, such as -OH, -NH₂, or -COOH, from a compound having a cyclic hydrocarbon. 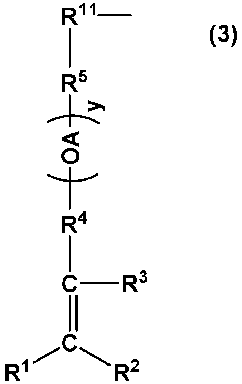 wherein in General Formula (3), R¹, R², R³, R⁴, R⁵, A, and y have the same meanings as described above; and R¹¹ represents a divalent compound residue having a cyclic hydrocarbon.

R⁸ may represent a group represented by the following General Formula (12). 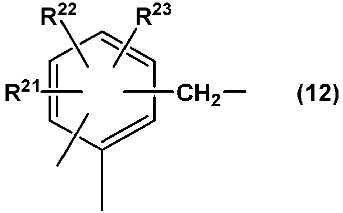 wherein in General Formula (12), R²¹, R²², and R²³ each independently represent a hydrogen atom, an alkyl group having 1 to 4 carbon atoms, or a phenyl group which may have an alkyl group having 1 to 4 carbon atoms, or respectively have the same meanings as those for a group represented by the following General Formula (11).

Furthermore, from the viewpoint of the tensile strength of the fiber-reinforced resin composite material, the compound represented by General Formula (2) described above is preferably a compound in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; y and b are the same as described above; R⁹ and R¹⁰ each represent a group represented by General Formula (3) described above, wherein in General Formula (3), R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; R¹¹ represents a group represented by the following General Formula (10); y is the same as described above; and R⁸ represents a group represented by General Formula (12) described above (hereinafter, referred to as Compound (2-1)). 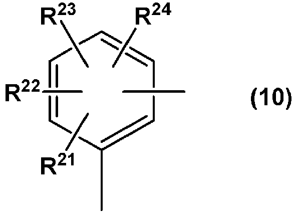 wherein in General Formula (10), R²¹, R²², R²³, and R²⁴ each independently represent a hydrogen atom, an alkyl group having 1 to 4 carbon atoms, a phenyl group which may have an alkyl group having 1 to 4 carbon atoms, or a group represented by the following General Formula (11). 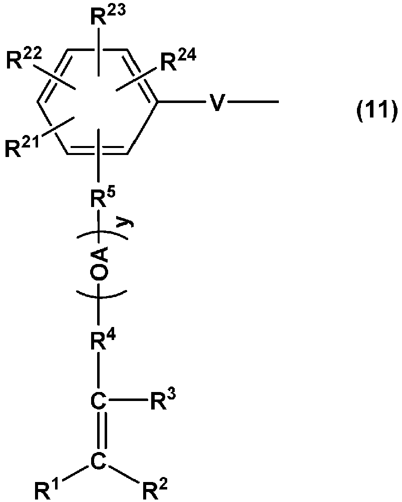 wherein in General Formula (11), R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; R²¹, R²², R²³, and R²⁴ each independently represent a hydrogen atom, an alkyl group having 1 to 4 carbon atoms, or a phenyl group which may have an alkyl group having 1 to 4 carbon atoms; y has the same meaning as described above; and V has the same meaning as T described above, or represents a single bond.

Furthermore, from the viewpoint of the tensile strength of the fiber-reinforced resin composite material, the compound represented by General Formula (2) described above is preferably a compound in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; y is 0; b represents an integer from 1 to 20; R⁹ and R¹⁰ each represent a group represented by General Formula (3) described above, wherein in General Formula (3), R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; R¹¹ represents a group represented by General Formula (10) described above, wherein in General Formula (10), R²¹, R²², R²³ and R²⁴ each independently represent a methyl group or a hydrogen atom, while at least one is a methyl group; y is 0; R⁸ represents a group represented by General Formula (12) described above, wherein in General Formula (12), R²¹, R²², and R²³ each independently represent a methyl group or a hydrogen atom, while at least one is methyl group (hereinafter, referred to as Compound (2-2)).

The compound represented by General Formula (1) described above and the compound represented by General Formula (2) described above can be used singly, or in combination of two or more kinds thereof.

According to the present embodiment, from the viewpoint of the tensile strength of the fiber-reinforced resin composite material, the radical reactive resin described above is preferably at least one compound selected from the group consisting of Compound (1-1) described above and Compound (2-1) described above, and more preferably at least one compound selected from the group consisting of Compound (1-2) described above and Compound (2-2) described above.

In the resin composition related to the present embodiment, a filler, a plasticizer, a curing aid, a diluent, and the like can be incorporated to the extent that the effects of the present invention are not impaired.

Examples of the filler include an inorganic filler and an organic filler, and from the viewpoint of increasing strength, an inorganic filler is preferred. Examples of the inorganic filler include zirconia, titanium, aluminum hydroxide, calcium carbonate, talc, clay, powdered glass, silica, barium sulfate, titanium oxide, and cement, and from the viewpoint of imparting flame retardance, aluminum hydroxide is preferred. These fillers can be used singly or as mixtures of two or more kinds thereof.

The plasticizer is preferably a phthalic acid ester or an elastomer, from the viewpoints of impact resistant performance enhancement, suppression of cracking, and suppression of curing shrinkage. Examples of the elastomer include vulcanized rubbers such as natural rubber and synthetic rubber; thermosetting resin-based rubbers such as urethane rubber and silicone rubber; and thermoplastic resin-based rubbers such as styrene-based, olefin-based, and vinyl chloride-based rubbers. These plasticizers can be used singly, or as mixtures of two or more kinds thereof.

The curing aid is preferably a radical-based photopolymerization initiator, a radical-based visible light photopolymerization initiator, or a radical-based thermal polymerization initiator, from the viewpoints of increase of the curing rate, and enhancement of strength and impact resistance.

Examples of the radical-based photopolymerization initiator include those known initiators having photosensitivity in the range from the ultraviolet region to the near-infrared region. Specific examples thereof include a benzoin, an acetophenone, an anthraquinone, a thioxanthone, and a benzophenone, and examples of the benzoin include benzoin, and derivatives such as benzoin ethyl ether and benzoin isopropyl ether. Examples of the acetophenone include acetophenone, and derivatives such as 2,2-dimethoxy-2-phenylacetophenone. Examples of the anthraquinone include derivatives such as 2-methylanthraquinone, 2-chloroanthraquinone, 2-ethylanthraquinone, and 2-t-butylanthraquinone. Examples of the thioxanthone include thioxanthone, and derivatives such as 2,4-dimethylthioxanthone. Examples of the benzophenone include benzophenone, and derivatives such as 4-benzoyl-4'-methyldiphenyl sulfide, 4,4'-dichlorobenzophenone, and N,N-dimethylaminobenzophenone. Other examples include known radical-based photopolymerization initiators such as 2,4,6-trimethylbenzoyldiphenylphosphine oxide.

Examples of the radical-based visible light photopolymerization initiator include initiators having photosensitivity in the wavelength range of 380 nm to 780 nm. Specific examples thereof include camphor-quinone, benzil, trimethylbenzoyldiphenylphosphine oxide, methylthioxanthone, and bispentadienyltitanium di(pentafluorophenyl) (Yamaoka, et al., "Hyomen (Surface)", 27(7), 548 (1989); and Sato, et al., "3rd Polymer Material Forum Abstracts", 1BP18 (1994)), and also include known composite initiator systems such as an organic peroxide catalyst/dye system, a diphenyliodonium salt/dye, a biimidazole/keto compound, a hexaarylbiimidazole compound/hydrogen-donating compound, a mercaptobenzothiazole/thiopyrylium salt, a metal arene/cyanine dye, and a hexaarylbiimidazole/radical generator (Japanese Examined Patent Publication No. S45-37377).

Examples of the radical-based thermal polymerization initiator include known organic peroxides and azo compounds. Examples of the organic peroxides include a ketone peroxide, a peroxy ketal, a hydroperoxide, diallyl peroxide, a diacyl peroxide, a peroxy ester, and a peroxy dicarbonate. These curing aids can be used singly or as mixtures of two or more kinds thereof.

In regard to the resin composition of the present embodiment, from the viewpoint that storage stability of the resin composition is not easily deteriorated, and the occurrence of pot life can be prevented, it is preferable not to include a curing aid.

The diluent is preferably a radical polymerizable diluent, from the viewpoints of improvement of operability resulting from viscosity decrease in the resin composition including a radical reactive resin, reduction of voids (bubbles), and compatibility with the radical reactive resin. Examples of the diluent include a styrene monomer, a diene, an acryl monomer, and a vinyl compound. The viscosity of such a diluent is preferably 10,000 mPa·s or less at 25°C, and more preferably 5,000 mP·s or less, from the viewpoint of decreasing the viscosity of the resin composition including a radical reactive resin.

Examples of the styrene monomer include styrene, various derivatives such as alkyl-, nitro-, cyano-, and halogen-derivatives of styrene, and divinylbenzene.

Examples of the diene include butadiene, 2,3-dimethylbutadiene, isoprene, and chloroprene.

Examples of the acryl monomer include acrylic acid esters such as an acrylic acid having a branched or linear alkyl group having 1 to 18 carbon atoms, an acrylic acid having a bicyclic hydrocarbon group having 5 to 10 carbon atoms, an acrylic acid having an aromatic hydrocarbon group having 6 to 14 carbon atoms, an AO adduct of an acrylic acid having an aromatic hydrocarbon group having 6 to 14 carbon atoms, allyl acrylate, propargyl acrylate, piperonyl acrylate, salicyl acrylate, furyl acrylate, furfuryl acrylate, tetrahydrofurfuryl acrylate, pyranyl acrylate, phenethyl acrylate, cresyl acrylate, triphenylmethyl acrylate, cumyl acrylate, 3-(N,N-dimethylamino)propyl acrylate, 2-hydroxyethyl acrylate, 2-hydroxypropyl acrylate, 1,6-hexanediol diacrylate, tricyclodecanediol diacrylate, trimethylolpropane triacrylate (0 to 15 adduct of AO), pentaerythritol triacrylate (0 to 15 adduct of AO), pentaerythritol tetraacrylate (0 to 20 adduct of AO), ditrimethylolpropane tetraacrylate (0 to 20 adduct of AO), dipentaerythritol hexaacrylate (0 to 30 adduct of AO), 1,1,1-trifluoroethyl acrylate, perfluoroethyl acrylate, perfluoro-n-propyl acrylate, and perfluoro-i-propyl acrylate; acrylic acid amides such as acrylic acid amide, acrylic acid N,N-dimethylamide, acrylic acid N,N-diethylamide, acrylic acid N,N-dipropylamide, acrylic acid N,N-di-i-propylamide, and acrylic acid anthracenylamide; acrylic acid anilide, acryloylnitrile, and acrolein.

Examples of the vinyl compound include vinyl chloride, vinylidene chloride, vinyl fluoride, vinylidene fluoride, N-vinylpyrrolidone, vinylpyridine, and vinyl acetate. Examples of the unsaturated dicarboxylic acid diester include diethyl citraconate, diethyl maleate, diethyl fumarate, and diethyl itaconate, and other examples include monomaleimide compounds such as N-phenylmaleimide, N-cyclohexylmaleimide, N-laurylmaleimide, and N-(4-hydroxyphenyl)maleimide; and N-acryloylphthalimide. Among them, from the viewpoints of compatibility with a radical reactive resin, vapor pressure, skin irritation, and viscosity reduction of the resin composition, benzyl acrylate (0 to 5 adducts of AO), 1,6-hexanediol diacrylate, tricyclodecanediol diacrylate, trimethylolpropane triacrylate (0 to 5 adducts of AO), pentaerythritol triacrylate (0 to 5 adducts of AO), pentaerythritol tetraacrylate (0 to 5 adducts of AO), ditrimethylolpropane tetraacrylate, dipentaerythritol hexaacrylate, and styrene are preferred. The diluents can be used singly or as mixtures of two or more kinds thereof.

In a case in which a diluent is used in combination, the diluent is incorporated such that the viscosity of the resin composition including a radical reactive resin becomes 500 mPa·s to 10,000 mPa·s, and preferably 1,000 mPa·s to 5,000 mPa·s. When the viscosity of the resin composition is adjusted to be within the range described above, it becomes easy to apply a necessary amount of the resin composition, and the resin composition tends to penetrate easily into the reinforcing fiber material.

Regarding the method for producing a radical reactive resin related to the present embodiment, any known method can be employed without any particular limitations. For example, a method of causing a polyol to react with a radical polymerizable unsaturated monocarboxylic acid, a method of causing a phenol-formalin condensate to react with a radical polymerizable unsaturated monocarboxylic acid, a method of trans-esterifying a polyol and an acrylic acid ester, or a method of causing an epoxy resin to react with a radical polymerizable unsaturated monocarboxylic acid, can be employed. There are no particular limitations on the radical polymerizable unsaturated monocarboxylic acid used, and examples thereof include a compound represented by the following General Formula (14). Among these, since acrylic acid has satisfactory reactivity with an epoxy group or a hydroxyl group, and a resin thus produced has excellent curing characteristics, acrylic acid can be particularly suitably used. 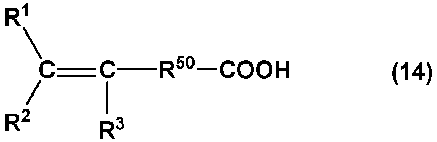 wherein in General Formula (14), R¹, R², and R³ respectively have the same meanings as described above; and R⁵⁰ represents -CH₂-, -O-, -CH₂=CH-, or a single bond.

The reinforcing fiber material used for the present embodiment is not particularly limited, and examples thereof include carbon fibers, graphite fibers, aramid fibers, silicon carbide fibers, alumina fibers, boron fibers, high-strength polyethylene fibers, tungsten carbide fibers, PBO fibers, glass fibers, and metal fibers. Among them, carbon fibers and graphite fibers are preferred from the viewpoints of tensile strength and lightweightness. Furthermore, these reinforcing fiber materials can be used in combination of plural kinds.

The shape of the reinforcing fiber material is not particularly limited, and examples thereof include a reinforcing fiber tow obtainable by gathering reinforcing fiber filaments, a unidirectional material obtainable by arranging reinforcing fiber tows in parallel in one direction, a nonwoven fabric formed from a woven fabric or shortly cut reinforcing fibers, and yarns.

The composition for producing a fiber-reinforced resin composite material can be obtained by applying the resin composition including a radical reactive resin to a reinforcing fiber material. The method for applying the resin composition to a reinforcing fiber material is not particularly limited, and known methods such as a hand lay-up method, a vacuum impregnation method, a spray method, a liquid immersion method, a transfer method, and a transport method can be employed without any particular limitations. Among them, from the viewpoints of general-purpose usefulness, efficiency, and uniformity of application, a hand lay-up method and a vacuum impregnation method are preferred.

The percentage content of the reinforcing fiber material (Wf value) in the composition for producing a fiber-reinforced resin composite material related to the present embodiment is appropriately selected according to the kind and form of the reinforcing fiber material, and the kind of the resin composition including a radical reactive resin; however, the percentage content is preferably 10% by mass to 90% by mass, and more preferably 30% by mass to 70% by mass. When the content of the reinforcing fiber material is in these ranges, a balance between weight reduction and tensile strength can be easily achieved.

Next, the process for obtaining a fiber-reinforced resin composite material by curing the composition for producing a fiber-reinforced resin composite material related to the present embodiment by irradiating the composition with ionizing radiation, will be explained.

The fiber-reinforced resin composite material can be obtained by introducing the composition for producing a fiber-reinforced resin composite material into a frame or the like and curing the composition, in order to shape the composite material into a certain form. There are no particular limitations on the molding method used in order to shape the fiber-reinforced resin composite material, and known methods such as vacuum molding, VaRTM molding, pultrusion molding, filament winding molding, injection molding, press molding, and braid molding can be employed.

The ionizing radiation used in the present embodiment is a radiation that brings about ionization and excitation of a medium in the path irradiated with the ionizing radiation. Examples of the ionizing radiation include radiations belonging to particulates, such as an electron beam and α-radiation; and radiations belonging to electromagnetic waves, such as X-radiation and γ-radiation. Among these, an electron beam is preferred from the viewpoints of directionality, a high energy input ratio (the proportion of energy given to the irradiated substance is high), ease of reaction control (the intensity of the electron energy can be easily adjusted, initiation/termination of the irradiation with an electron beam can be easily achieved, or the like), and ease of handling, such as that there is no risk of radioactive contamination in the case of a radioactive isotope.

An electron beam is a flow of electrons having very high energy, which is obtainable by accelerating electrons at high voltage using, for example, an electron accelerator, and the electron beam can be radiated using an irradiation apparatus of the electron accelerator. The energy of the electron beam is preferably 200 keV to 10 MeV. When the energy of the electron beam is in the range described above, the composition for producing a fiber-reinforced resin composite material can be sufficiently cured while the irradiation apparatus becoming a large-scale apparatus is avoided.

The total absorbed dose of the ionizing radiation for the composition for producing a fiber-reinforced resin composite material to be processed is preferably 10 kGy to 500 kGy, and more preferably 10 kGy to 200 kGy. When the total absorbed dose is in the range described above, the composition for producing a fiber-reinforced resin composite material can be sufficiently cured while coloration, deterioration, and high cost can be avoided. The absorbed dose of the ionizing radiation can be measured using a cellulose triacetate (CTA) dosimeter, which utilizes the fact that the absorbance is linearly increased by irradiation with radiation.

The ionizing radiation can be radiated directly to the composition for producing a fiber-reinforced resin composite material under vacuum conditions, reduced pressure conditions, or inactivated gas conditions such as air or nitrogen. Furthermore, the composition for producing a fiber-reinforced resin composite material may also be in a state of being fitted in a frame.

### EXAMPLES

Hereinafter, the present invention will be further explained by way of Examples, but the present invention is not intended to be limited by these Examples.

### <Production of fiber-reinforced resin composite material>

### (Example 1)

Into a reaction vessel equipped with a stirrer, a thermometer, a reflux cooler, an air gas inlet tube and a dropping funnel, 703.2 parts by mass of bisphenol A diglycidyl ether (2,2-bis(4-glycidyloxyphenyl)propane; manufactured by Tokyo Chemical Industry Co., Ltd.), a benzylammonium salt as an addition reaction catalyst in an amount of 0.5% by mass with respect to the reactants in the system (bisphenol A diglycidyl ether and acrylic acid), and methylhydroquinone as a radical polymerization inhibitor in an amount of 0.1% by mass with respect to the reactants in the system (bisphenol A diglycidyl ether and acrylic acid) were introduced. To this, 296 parts by mass of acrylic acid was added dropwise, and the mixture was allowed to react at 110°C until the epoxy equivalent reached 20,000 or more. Thus, bisphenol A diglycidyl ether diacrylate was obtained. 80 parts by mass of bisphenol A diglycidyl ether diacrylate thus obtained, 20 parts by mass of ethoxylated bisphenol A diacrylate (ABE-300; manufactured by Shin Nakamura Chemical Co., Ltd.), and 30 parts by mass of benzyl acrylate (VISCOAT #160; manufactured by Osaka Organic Chemical Industry, Ltd.) as a diluent were mixed to be uniform, and thus a radical reactive resin composition was obtained.

The radical reactive resin composition obtained as described above was applied to a carbon fiber woven fabric (SA3203/W2105W; thickness: 1 mm, width and length: 30 mm; manufactured by Sakai Ovex Co., Ltd.) by a hand lay-up method to obtain a Wf value of 60% by mass, and then migration was performed for 1 hour at 80°C under vacuum conditions. Thus, a composition for producing a fiber-reinforced resin composite material was obtained. Subsequently, the composition for producing a fiber-reinforced resin composite material was irradiated with an electron beam in an electron accelerator, RHODOTRON TT200 (10 MeV) (manufactured by Ion Beam Applications SA) at 25°C under air conditions, such that the total electron beam absorbed dose would be 5 kGy, and thus a fiber-reinforced resin composite material was obtained.

### (Examples 2 to 5)

Compositions for producing a fiber-reinforced resin composite material obtained in the same manner as in Example 1 were irradiated with an electron beam so as to obtain the total absorbed doses described in Table 1, and thereby, fiber-reinforced resin composite materials were respectively obtained.

### (Examples 6 to 10)

Compositions for producing a fiber-reinforced resin composite material obtained in the same manner as in Example 1, except that the mixing composition ratio of the radical reactive resin composition used in Example 1 was changed to the mixing composition ratios described in Table 2, were irradiated with an electron beam so as to obtain the total absorbed doses described in Table 2, and thereby, fiber-reinforced resin composite materials were respectively obtained.

### (Example 11)

Into a reaction vessel equipped with a stirrer, a thermometer, a reflux cooler, an air gas inlet tube and a dropping funnel, 367.9 parts by mass of a cresol-novolac epoxy resin (EOCN-103S; manufactured by Nippon Kayaku Co., Ltd., resin represented by the following Formula (15)), 184.1 parts by mass of benzyl acrylate as a diluent, a benzylammonium salt as an addition reaction catalyst in an amount of 0.5% by mass with respect to the reactants in the system (cresol-novolac epoxy resin and acrylic acid), and methylhydroquinone as a radical polymerization inhibitor in an amount of 0.1% by mass with respect to the reactants in the system (cresol-novolac epoxy resin and acrylic acid) were introduced. To this, 123 parts by mass of acrylic acid was added dropwise, and the mixture was allowed to react at 110°C until the epoxy equivalent reached 20,000 or more. Thus, a mixture of cresol-novolac glycidyl ether acrylate and benzyl acrylate was obtained. 110 parts by mass of the mixture thus obtained and 20 parts by mass of ethoxylated bisphenol A diacrylate were mixed to be uniform, and thus a radical reactive resin composition was obtained.

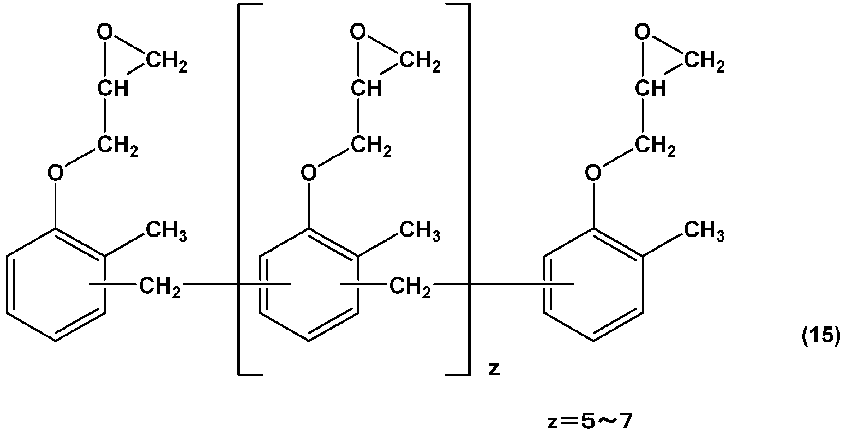

The same treatment as that used in Example 1 was carried out, except that the radical reactive resin composition obtained as described above was used, and thus a fiber-reinforced resin composite material was obtained.

### (Examples 12 to 15)

Compositions for producing a fiber-reinforced resin composite material obtained in the same manner as in Example 11 were irradiated with an electron beam so as to obtain the total absorbed doses described in Table 3, and thereby, fiber-reinforced resin composite materials were respectively obtained.

### (Examples 16 to 20)

Compositions for producing a fiber-reinforced resin composite material obtained in the same manner as in Example 11, except that the mixing composition ratio of the radical reactive resin composition used in Example 11 was changed to the mixing composition ratios described in Table 4, were irradiated with an electron beam so as to obtain the total absorbed doses described in Table 4, and thereby, fiber-reinforced resin composite materials were respectively obtained.

### (Example 21)

80 parts by mass of a urethane acrylate having a hexafunctional acryloyl group (EBECRYL 1290; manufactured by Daicel-Allnex, Ltd.), 20 parts by mass of ethoxylated bisphenol A diacrylate, and 30 parts by mass of benzyl acrylate as a diluent were mixed to be uniform, and a radical reactive resin composition was obtained.

The same treatment as that used in Example 1 was carried out, except that the radical reactive resin composition obtained as described above was used, and a fiber-reinforced resin composite material was obtained.

### (Examples 22 to 25)

Compositions for producing a fiber-reinforced resin composite material obtained in the same manner as in Example 21 were irradiated with an electron beam so as to obtain the total absorbed doses described in Table 5, and thereby, fiber-reinforced resin composite materials were respectively obtained.

### (Examples 26 to 30)

Compositions for producing a fiber-reinforced resin composite material obtained in the same manner as in Example 21, except that the mixing composition ratio of the radical reactive resin composition used in Example 21 was changed to the mixing composition ratios described in Table 6, were irradiated with an electron beam so as to obtain the total absorbed doses described in Table 6, and thereby, fiber-reinforced resin composite materials were respectively obtained.

### (Example 31)

80 parts by mass of styrene, 20 parts by mass of ethoxylated bisphenol A diacrylate, and 30 parts by mass of benzyl acrylate as a diluent were mixed to be uniform, and a radical reactive resin composition was obtained.

The same treatment as that used in Example 1 was carried out, except that the radical reactive resin composition obtained as described above was used, and a fiber-reinforced resin composite material was obtained.

### (Examples 32 to 35)

Compositions for producing a fiber-reinforced resin composite material obtained in the same manner as in Example 31 were irradiated with an electron beam so as to obtain the total absorbed doses described in Table 7, and thereby, fiber-reinforced resin composite materials were respectively obtained.

### (Examples 36 to 40)

Compositions for producing a fiber-reinforced resin composite material obtained in the same manner as in Example 31, except that the mixing composition ratio of the radical reactive resin composition used in Example 31 was changed to the mixing composition ratios described in Table 8, were irradiated with an electron beam so as to obtain the total absorbed doses described in Table 8, and thereby, fiber-reinforced resin composite materials were respectively obtained.

### (Comparative Example 1)

100 parts by mass of bisphenol A diglycidyl ether, 3 parts by mass of dicyandiamide as a thermal polymerization initiator, and 5 parts by mass of 3-(3,4-dichlorophenyl)-1,1-methylurea as a curing accelerator were mixed to be uniform, and a resin composition was obtained.

The resin composition obtained as described above was used to impregnate a carbon fiber woven fabric (SA3203/W2105W; thickness: 1 mm, width and length: 30 mm; manufactured by Sakai Ovex Co., Ltd.) by a hand lay-up method to obtain a Wf value of 60% by mass, and then migration was performed for 1 hour at 80°C under vacuum conditions. Thus, a composition for producing a fiber-reinforced resin composite material was obtained. Subsequently, the composition for producing a fiber-reinforced resin composite material was subjected to heating treatments for 30 minutes at 80°C, for 30 minutes at 130°C, and for 1 hour at 150°C, and thus a fiber-reinforced resin composite material was obtained.

### (Comparative Example 2)

The same treatment as that used in Comparative Example 1 was carried out, except that bisphenol A diglycidyl ether was used as the resin composition, and a fiber-reinforced resin composite material was obtained.

### (Comparative Example 3)

The same treatment as that used in Comparative Example 1 was carried out, except that a composition for producing a fiber-reinforced resin composite material obtained in the same manner as in Example 1 was used, and a fiber-reinforced resin composite material was obtained.

### (Comparative Example 4)

The same treatment as that used in Comparative Example 1 was carried out, except that a composition for producing a fiber-reinforced resin composite material obtained in the same manner as in Example 11 was used, and a fiber-reinforced resin composite material was obtained.

### (Comparative Example 5)

A radical reactive resin composition obtained in the same manner as in Example 1 was used to impregnate a carbon fiber woven fabric (SA3203/W2105W; thickness: 1 mm, width and length: 30 mm; manufactured by Sakai Ovex Co., Ltd.) by a hand lay-up method to obtain a Wf value of 60% by mass, and then migration was performed for 1 hour at 80°C under vacuum conditions. Thus, a composition for producing a fiber-reinforced resin composite material was obtained. Subsequently, the composition for producing a fiber-reinforced resin composite material was irradiated with a halogen lamp (dichroic halogen JDR110V85WHM/K7-H, manufactured by Ushio, Inc.) for 30 minutes at 25°C under air conditions, and a fiber-reinforced resin composite material was obtained.

### (Comparative Example 6)

The same treatment as that used in Comparative Example 5 was carried out, except that a composition for producing a fiber-reinforced resin composite material obtained in the same manner as in Example 11 was used, and a fiber-reinforced resin composite material was obtained.

### (Comparative Example 7)

The same treatment as that used in Example 1 was carried out, except that bisphenol A diglycidyl ether was used as the resin composition, and a fiber-reinforced resin composite material was obtained.

### (Comparative Examples 8 to 11)

Compositions for producing a fiber-reinforced resin composite material obtained in the same manner as in Comparative Example 7 were irradiated with an electron beam so as to obtain the total absorbed doses described in Table 11, and thereby, fiber-reinforced resin composite materials were respectively obtained.

### (Comparative Example 12)

The same treatment as that used in Example 1 was carried out, except that a resin composition obtained by mixing 100 parts by mass of bisphenol A diglycidyl ether and 5 parts by mass of an iodonium salt (UV9392; manufactured by General Electric Company) as a photopolymerization initiator to be uniform was used, and a fiber-reinforced resin composite material was obtained.

### (Comparative Examples 13 to 16)

Compositions for producing a fiber-reinforced resin composite material obtained in the same manner as in Comparative Example 12 were irradiated with an electron beam so as to obtain the total absorbed doses described in Table 12, and thereby, fiber-reinforced resin composite materials were respectively obtained.

Meanwhile, the details of the various curing processes indicated in the tables are as follows.

### <Total electron beam absorbed dose>

5 kGy (5 kGy x one time)
10 kGy (10 kGy x one time)
100 kGy (25 kGy x 4 times)
500 kGy (25 kGy x 20 times)
1000 kGy (25 kGy x 40 times)

Electron beam irradiation for one time took about 0.3 minutes.

### <Treatment time (minutes)>

Curing by ionizing radiation: electron beam irradiation time
Thermal curing: heating time

### <Measurement of total absorbed dose>

For the measurement of the total absorbed dose, CTA dosimeter FTR115 (manufactured by Fujifilm Corp.) was used, and for the measurement of the absorbance of the CTA dosimeter, spectrophotometer UV-MINI1240 (manufactured by Shimadzu Corp.) was used. The measured value of dose obtained by the present dosimeter can be traced back to the reference dose of the NPL in the United Kingdom.

The fiber-reinforced resin composite materials obtained in Examples and Comparative examples were subjected to the evaluations described below. The results are presented in the various tables.

### <Evaluation methods>

(1) Curability: This was evaluated by tactile inspection.
   A: Curability was satisfactory without any tackiness.
   B: Curability was poor with slight tackiness.
   C: Curability was poor with tackiness and shape disintegration.
(2) Dimensional stability (shrinkage): This was evaluated by visual inspection.
   A: Satisfactory without any curling or shrinkage.
   B: Poor with curling and shrinkage.
   C: Poor with curling, shrinkage, and cracking.
(3) High temperature stability (resin composition): After leaving and storing for one week at 80°C, the state was evaluated.
   A: No change
   B: Thickening occurred (slightly cured)
   C: Solidified (cured)
(4) Tensile strength: An evaluation similar to JIS K7073-1988 was performed using an Instron Universal Tester. The tensile strength is expressed in MPa, and a larger value indicates more satisfactory tensile strength.

**[Table 1]**

| | Example 1 | Example 2 | Example 3 | Example 4 | Example 5 |
|---|---|---|---|---|---|
| Bisphenol A diglycidyl ether diacrylate | 80 | 80 | 80 | 80 | 80 |
| Ethoxylated bisphenol A diacrylate | 20 | 20 | 20 | 20 | 20 |
| Benzyl acrylate | 30 | 30 | 30 | 30 | 30 |
| Total absorbed dose (kGy) | 5 | 10 | 100 | 500 | 1000 |
| Treatment time (min) | 0.3 | 0.3 | 1.3 | 6.7 | 13.3 |
| Curability | B | A | A | A | A |
| Dimensional stability (shrinkage) | A | A | A | A | B |
| High temperature stability (resin composition) | A | A | A | A | A |
| Tensile strength (MPa) | 210 | 400 | 428 | 410 | 320 |

**[Table 2]**

| | Example 6 | Example 7 | Example 8 | Example 9 | Example 10 |
|---|---|---|---|---|---|
| Bisphenol A diglycidyl ether diacrylate | 60 | 60 | 60 | 60 | 60 |
| Ethoxylated bisphenol A diacrylate | 40 | 40 | 40 | 40 | 40 |
| Benzyl acrylate | 30 | 30 | 30 | 30 | 30 |
| Total absorbed dose (kGy) | 5 | 10 | 100 | 500 | 1000 |
| Treatment time (min) | 0.3 | 0.3 | 1.3 | 6.7 | 13.3 |
| Curability | B | A | A | A | A |
| Dimensional stability (shrinkage) | A | A | A | A | B |
| High temperature stability (resin composition) | A | A | A | A | A |
| Tensile strength (MPa) | 200 | 401 | 433 | 415 | 289 |

**[Table 3]**

| | Example 11 | Example 12 | Example 13 | Example 14 | Example 15 |
|---|---|---|---|---|---|
| Cresol-novolac glycidyl ether acrylate | 80 | 80 | 80 | 80 | 80 |
| Ethoxylated bisphenol A diacrylate | 20 | 20 | 20 | 20 | 20 |
| Benzyl acrylate | 30 | 30 | 30 | 30 | 30 |
| Total absorbed dose (kGy) | 5 | 10 | 100 | 500 | 1000 |
| Treatment time (min) | 0.3 | 0.3 | 1.3 | 6.7 | 13.3 |
| Curability | B | A | A | A | A |
| Dimensional stability (shrinkage) | A | A | A | A | B |
| High temperature stability (resin composition) | A | A | A | A | A |
| Tensile strength (MPa) | 210 | 389 | 400 | 388 | 265 |

**[Table 4]**

| | Example 16 | Example 17 | Example 18 | Example 19 | Example 20 |
|---|---|---|---|---|---|
| Cresol-novolac glycidyl ether acrylate | 60 | 60 | 60 | 60 | 60 |
| Ethoxylated bisphenol A diacrylate | 40 | 40 | 40 | 40 | 40 |
| Benzyl acrylate | 30 | 30 | 30 | 30 | 30 |
| Total absorbed dose (kGy) | 5 | 10 | 100 | 500 | 1000 |
| Treatment time (min) | 0.3 | 0.3 | 1.3 | 6.7 | 13.3 |
| Curability | B | A | A | A | A |
| Dimensional stability (shrinkage) | A | A | A | A | B |
| High temperature stability (resin composition) | A | A | A | A | A |
| Tensile strength (MPa) | 234 | 370 | 405 | 390 | 254 |

**[Table 5]**

| | Example 21 | Example 22 | Example 23 | Example 24 | Example 25 |
|---|---|---|---|---|---|
| Urethane acrylate | 80 | 80 | 80 | 80 | 80 |
| Ethoxylated bisphenol A diacrylate | 20 | 20 | 20 | 20 | 20 |
| Benzyl acrylate | 30 | 30 | 30 | 30 | 30 |
| Total absorbed dose (kGy) | 5 | 10 | 100 | 500 | 1000 |
| Treatment time (min) | 0.3 | 0.3 | 1.3 | 6.7 | 13.3 |
| Curability | B | A | A | A | A |
| Dimensional stability (shrinkage) | A | A | A | A | B |
| High temperature stability (resin composition) | A | A | A | A | A |
| Tensile strength (MPa) | 200 | 230 | 320 | 330 | 290 |

**[Table 6]**

| | Example 26 | Example 27 | Example 28 | Example 29 | Example 30 |
|---|---|---|---|---|---|
| Urethane acrylate | 60 | 60 | 60 | 60 | 60 |
| Ethoxylated bisphenol A diacrylate | 40 | 40 | 40 | 40 | 40 |
| Benzyl acrylate | 30 | 30 | 30 | 30 | 30 |
| Total absorbed dose (kGy) | 5 | 10 | 100 | 500 | 1000 |
| Treatment time (min) | 0.3 | 0.3 | 1.3 | 6.7 | 13.3 |
| Curability | B | A | A | A | A |
| Dimensional stability (shrinkage) | A | A | A | A | B |
| High temperature stability (resin composition) | A | A | A | A | A |
| Tensile strength (MPa) | 210 | 240 | 320 | 330 | 280 |

**[Table 7]**

| | Example 31 | Example 32 | Example 33 | Example 34 | Example 35 |
|---|---|---|---|---|---|
| Styrene | 80 | 80 | 80 | 80 | 80 |
| Ethoxylated bisphenol A diacrylate | 20 | 20 | 20 | 20 | 20 |
| Benzyl acrylate | 30 | 30 | 30 | 30 | 30 |
| Total absorbed dose (kGy) | 5 | 10 | 100 | 500 | 1000 |
| Treatment time (min) | 0.3 | 0.3 | 1.3 | 6.7 | 13.3 |
| Curability | B | B | A | A | A |
| Dimensional stability (shrinkage) | A | A | A | A | A |
| High temperature stability (resin composition) | A | A | A | A | A |
| Tensile strength (MPa) | 110 | 187 | 270 | 300 | 200 |

**[Table 8]**

| | Example 36 | Example 37 | Example 38 | Example 39 | Example 40 |
|---|---|---|---|---|---|
| Styrene | 60 | 60 | 60 | 60 | 60 |
| Ethoxylated bisphenol A diacrylate | 40 | 40 | 40 | 40 | 40 |
| Benzyl acrylate | 30 | 30 | 30 | 30 | 30 |
| Total absorbed dose (kGy) | 5 | 10 | 100 | 500 | 1000 |
| Treatment time (min) | 0.3 | 0.3 | 1.3 | 6.7 | 13.3 |
| Curability | B | B | A | A | A |
| Dimensional stability (shrinkage) | A | A | A | A | B |
| High temperature stability (resin composition) | A | A | A | A | A |
| Tensile strength (MPa) | 180 | 200 | 280 | 320 | 190 |

**[Table 9]**

| | Comparative Example 1 | Comparative Example 2 | Comparative Example 3 | Comparative Example 4 |
|---|---|---|---|---|
| Bisphenol A diglycidyl ether | 100 | 100 | - | - |
| Dicyandiamide | 3 | - | - | - |
| 3-(3,4-dichlorophenyl)-1,1-methylurea | 5 | - | - | - |
| Bisphenol A diglycidyl ether diacrylate | - | - | 80 | - |
| Cresol-novolac glycidyl ether acrylate | - | - | - | 80 |
| Ethoxylated bisphenol A diacrylate | - | - | 20 | 20 |
| Benzyl acrylate | - | - | 30 | 30 |
| Treatment time (min) | 120 | 120 | 120 | 120 |
| Curability | B | B | B | B |
| Dimensional stability (shrinkage) | A | A | A | A |
| High temperature stability (resin composition) | C | A | A | A |
| Tensile strength (MPa) | 420 | 80 | 105 | 102 |

**[Table 10]**

| | Comparative Example 5 | Comparative Example 6 |
|---|---|---|
| Bisphenol A diglycidyl ether diacrylate | 80 | - |
| Cresol-novolac glycidyl ether acrylate | - | 80 |
| Ethoxylated bisphenol A diacrylate | 20 | 20 |
| Benzyl acrylate | 30 | 30 |
| Treatment time (min) | 30 | 30 |
| Curability | C | C |
| Dimensional stability (shrinkage) | - | - |
| High temperature stability (resin composition) | A | A |
| Tensile strength (MPa) | - | - |

**[Table 11]**

| | Comparative Example 7 | Comparative Example 8 | Comparative Example 9 | Comparative Example 10 | Comparative Example 11 |
|---|---|---|---|---|---|
| Bisphenol A diglycidyl ether | 100 | 100 | 100 | 100 | 100 |
| Total absorbed dose (kGy) | 5 | 10 | 100 | 500 | 1000 |
| Curing time (min) | 0.3 | 0.3 | 1.3 | 6.7 | 13.3 |
| Curability | C | C | C | C | C |
| Dimensional stability (shrinkage) | - | - | - | - | - |
| High temperature stability (resin composition) | B | B | B | B | B |
| Tensile strength (MPa) | - | - | - | - | - |

**[Table 12]**

| | Comparative Example 12 | Comparative Example 13 | Comparative Example 14 | Comparative Example 15 | Comparative Example 16 |
|---|---|---|---|---|---|
| Bisphenol A diglycidyl ether | 100 | 100 | 100 | 100 | 100 |
| UV9392 | 5 | 5 | 5 | 5 | 5 |
| Total absorbed dose (kGy) | 5 | 10 | 100 | 500 | 1000 |
| Curing time (min) | 0.3 | 0.3 | 1.3 | 6.7 | 13.3 |
| Curability | C | B | A | A | A |
| Dimensional stability (shrinkage) | A | A | A | A | B |
| High temperature stability (resin composition) | C | C | C | C | C |
| Tensile strength (MPa) | - | 201 | 333 | 355 | 190 |

### Industrial Applicability

As explained above, according to the present invention, since a composition for producing a fiber-reinforced resin composite material can be cured uniformly and rapidly, a fiber-reinforced resin composite material can be produced in a large quantity in a short period of time. Furthermore, according to the method of the present invention, since the resin composition described above can be cured sufficiently without depending on the incorporation of a curing aid, there is no deterioration of stability, such as initiation of curing, and the composition for producing a fiber-reinforced resin composite material can be stored for a long time period.

## Claims

1. A method for producing a fiber-reinforced resin composite material, the method comprising a step of curing a composition for producing a fiber-reinforced resin composite material, which includes a reinforcing fiber material and a resin composition including a radical reactive resin having at least one polymerizable unsaturated double bond, by irradiating the composition with ionizing radiation.

2. The method for producing a fiber-reinforced resin composite material according to claim 1, wherein the total absorbed dose of the ionizing radiation for the composition for producing a fiber-reinforced resin composite material is 10 kGy to 500 kGy.

3. The method for producing a fiber-reinforced resin composite material according to claim 1 or 2, wherein the radical reactive resin is at least one compound selected from the group consisting of a compound represented by the following General Formula (1) and a compound represented by the following General Formula (2): 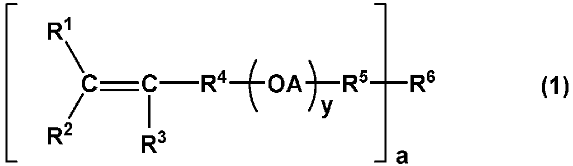 wherein in General Formula (1), R¹, R² and R³ each independently represent a hydrogen atom, a halogen atom, an alkyl group having 1 to 4 carbon atoms, or a phenyl group which may have an alkyl group having 1 to 4 carbon atoms; R⁴ represents -C(=O)-, -C(=O)-O-(CH₂)ₘ-(wherein m represents an integer from 1 to 3), -C(=O)-O-NHC(=O)-, -C(=O)-O-CH(OH)-CH₂-CH₂-, -C(=O)-O-CH₂-CH(OH)-CH₂-, -(CH₂)ₙ-(wherein n represents an integer from 1 to 3), -O-C(=O)-, -CH₂=CH-C(=O)-, or a single bond; a represents an integer from 1 to 40; R⁵ represents -O-, -N(-R⁷)- (wherein R⁷ represents a hydrogen atom or an alkyl group having 1 to 3 carbon atoms), or -O-(O=)C-; R⁶ represents a branched or linear a-valent hydrocarbon compound residue, an a-valent compound residue having a cyclic hydrocarbon, an a-valent urethane compound residue, an a-valent ester compound residue, or an a-valent ether compound residue; A represents an alkylene group having 2 to 4 carbon atoms; y is the average number of added moles of an oxyalkylene group represented by OA, and represents an integer from 0 to 40; 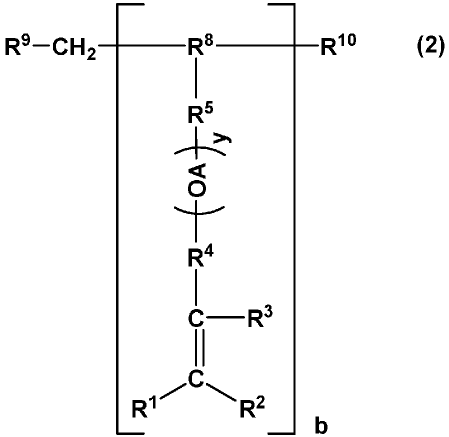 wherein in General Formula (2), R¹, R², R³, R⁴, R⁵, A and y respectively have the same meanings as described above; R⁸ represents a trivalent compound residue having a cyclic hydrocarbon; R⁹ and R¹⁰ each independently represent a group represented by the following General Formula (3); b represents an integer from 1 to 40; 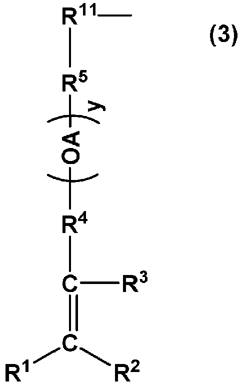 wherein in General Formula (3), R¹, R², R³, R⁴, R⁵, A and y respectively have the same meanings as described above; and R¹¹ represents a divalent compound residue having a cyclic hydrocarbon.

4. The method for producing a fiber-reinforced resin composite material according to claim 3, wherein the radical reactive resin is at least one compound selected from the group consisting of a compound represented by General Formula (1) described above, in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; a is 2; y has the same meaning as described above; and R⁶ represents a group represented by the following General Formula (4), and a compound represented by General Formula (2) described above, in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; y and b respectively have the same meanings as described above; R⁹ and R¹⁰ each represent a group represented by General Formula (3) described above, wherein in General Formula (3), R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; R¹¹ represents a group represented by the following General Formula (10); y has the same meaning as described above; and R⁸ represents a group represented by the following General Formula (12): 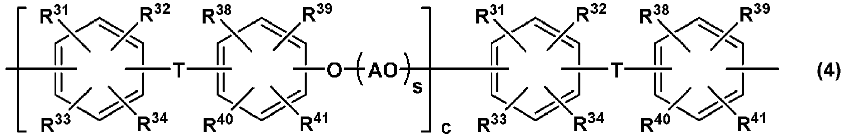 wherein in General Formula (4), R³¹, R³², R³³, R³⁴, R³⁸, R³⁹_{,} R⁴⁰ and R⁴¹ each independently represent a hydrogen atom, an alkyl group having 1 to 4 carbon atoms, or a phenyl group which may have an alkyl group having 1 to 4 carbon atoms; T represents a divalent group represented by the following General Formula (5), a divalent group represented by the following Formula (6), a divalent group represented by the following Formula (7), a divalent group represented by the following Formula (8), a divalent group represented by the following Formula (9), or -SO₂-; s is the average number of added moles of an alkyleneoxy group represented by AO, and represents an integer from 0 to 40; c represents an integer from 0 to 20; 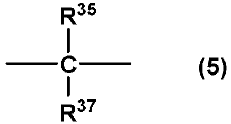 wherein in General Formula (5), R³⁵ and R³⁷ each independently represent a hydrogen atom, an alkyl group having 1 to 4 carbon atoms, a phenyl group which may have an alkyl group having 1 to 4 carbon atoms, -CF₃, -CHF₂ or -CH₂F, or R³⁵ and R³⁷ represent =CCl₂; 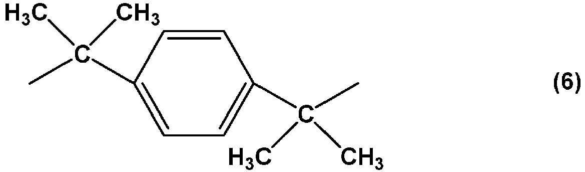 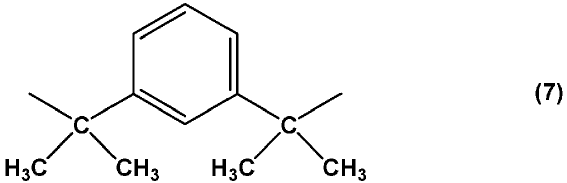 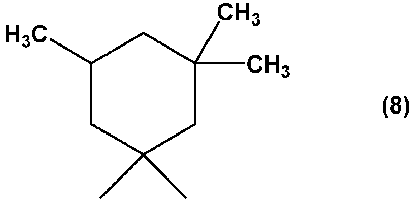 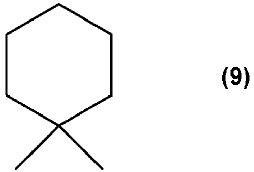 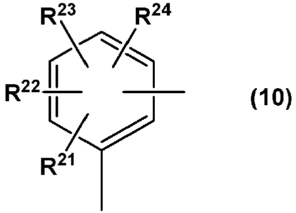 wherein in General Formula (10), R²¹, R²², R²³ and R²⁴ each independently represent a hydrogen atom, an alkyl group having 1 to 4 carbon atoms, a phenyl group which may have an alkyl group having 1 to 4 carbon atoms, or a group represented by the following General Formula (11): 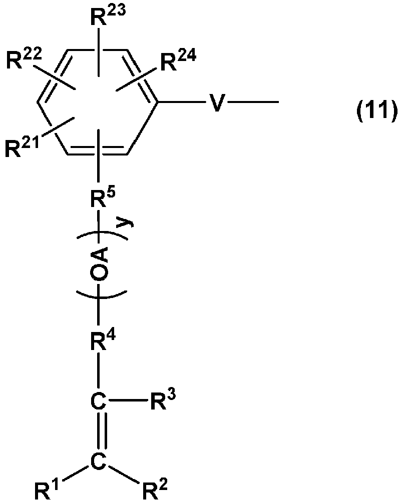 wherein in General Formula (11), R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; R²¹, R²², R²³ and R²⁴ each independently represent a hydrogen atom, an alkyl group having 1 to 4 carbon atoms, or a phenyl group which may have an alkyl group having 1 to 4 carbon atoms; y has the same meaning as described above; V has the same meaning as T described above, or represents a single bond; 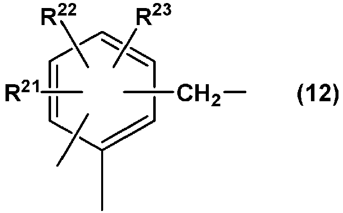 wherein in General Formula (12), R²¹, R²² and R²³ each independently represent a hydrogen atom, an alkyl group having 1 to 4 carbon atoms, or a phenyl group which may have an alkyl group having 1 to 4 carbon atoms, or has the same meaning as a group represented by General Formula (11) described above.

5. The method for producing a fiber-reinforced resin composite material according to claim 4, wherein the radical reactive resin is at least one compound selected from the group consisting of a compound represented by General Formula (1) described above, in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; y is 0; a is 2; and R⁶ represents a group represented by the following General Formula (13), and a compound represented by General Formula (2) described above, in which R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; y is 0; b represents an integer from 1 to 20; R⁹ and R¹⁰ each represent a group represented by General Formula (3) described above, wherein in General Formula (3), R¹ and R² represent hydrogen atoms; R³ represents a hydrogen atom or a methyl group; R⁴ represents -C(=O)-, -C(=O)-O-CH(OH)-CH₂-CH₂-, or -C(=O)-O-CH₂-CH(OH)-CH₂-; R⁵ represents -O-; R¹¹ represents a group represented by General Formula (10) described above, wherein in General Formula (10), R²¹, R²², R²³ and R²⁴ each independently represent a methyl group or a hydrogen atom, while at least one is a methyl group; y is 0; R⁸ represents a group represented by General Formula (12) described above, wherein in General Formula (12), R²¹, R²² and R²³ each independently represent a methyl group or a hydrogen atom, while at least one is a methyl group; 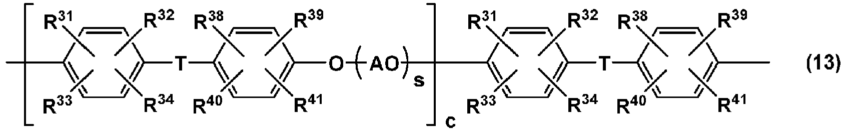 wherein in General Formula (13), R³¹, R³², R³³, R³⁴, R³⁸, R³⁹, R⁴⁰ and R⁴¹ represent hydrogen atoms; T represents a divalent group represented by General Formula (5) described above, wherein in General Formula (5), R³⁵ and R³⁷ represent methyl groups; and c represents 0.
